Europäisches Patentamt

European Patent Office

Office européen des brevets

(11) Publication number: **0 371 788 B1**

# EUROPEAN PATENT SPECIFICATION

(45) Date of publication of patent specification: **05.10.94**  (51) Int. Cl.5: **B60C 11/11**, B60C 9/20

(21) Application number: **89312436.2**

(22) Date of filing: **29.11.89**

Divisional application 93200583.8 filed on 29/11/89.

(54) **Pneumatic radial tyre.**

(30) Priority: **30.11.88 JP 302983/88**
**30.11.88 JP 302984/88**
**30.11.88 JP 302985/88**
**30.11.88 JP 302988/88**
**30.11.88 JP 302990/88**

(43) Date of publication of application:
**06.06.90 Bulletin 90/23**

(45) Publication of the grant of the patent:
**05.10.94 Bulletin 94/40**

(84) Designated Contracting States:
**DE FR GB**

(56) References cited:
EP-A- 0 157 716    EP-A- 0 196 161
EP-A- 0 237 462    FR-A- 1 548 673
FR-A- 2 388 685    US-A- 4 730 654
US-A- 4 819 704

PATENT ABSTRACTS OF JAPAN, vol. 12, no. 212 (M-710)[3059], 17th June 1988;& JP-A-61 156 129 (YOKOHAMA RUBBER CO., LTD) 21-01-1988

(73) Proprietor: **SUMITOMO RUBBER INDUSTRIES LIMITED**
**1-1 Tsutsuicho 1-chome**
**Chuo-ku**
**Kobe-shi Hyogo-ken (JP)**

(72) Inventor: **Kajiwara, Shinzo**
**8-6 Maikodai 5-chome**
**Tarumi-ku**
**Kobe-shi Hyogo-ken (JP)**
Inventor: **Yanase, Minao**
**8-1 Gakuen Nishimachi 5-chome**
**Nishi-ku**
**Kobe-shi Hyogo-ken (JP)**
Inventor: **Konii, Yoshio**
**5-17 Kariguchidai 8-chome**
**Tarumi-ku**
**Kobe-shi Hyogo-ken (JP)**

(74) Representative: **Stewart, Charles Geoffrey**
**SP TYRES UK LIMITED**
**Tyre Technical Division**
**Fort Dunlop, Erdington, Birmingham B24 9OT (GB)**

## EP 0 371 788 B1

**Description**

This invention relates to a pneumatic radial tyre, and more particularly to a pneumatic radial tyre of improved steerability for passenger cars.

Radial tyres are widely used to give good steering stability, ride comfort, wear rates and so on. However, tyres which are superior in a straightforward driving performance by preventing drifting to one side of a car in order to increase the driving safety of a car are now being demanded. Conventionally, one-side drifting is considered to be caused by the so-called conicity in which the circumferential lengths of the belt layer in the right and left sides of the tyre are different from each other. Therefore, various methods have been tried to improve the homogeneity in the right and left directions of the tyres axis.

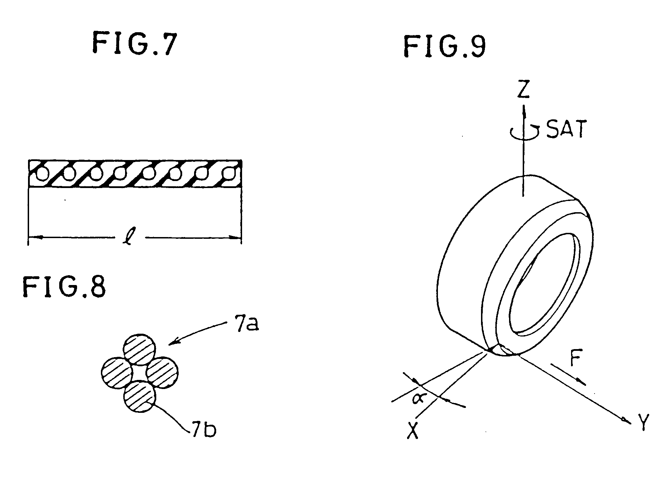

On the other hand, owing to the recent progress in tyre measurement techniques, as shown schematically in Fig.9, the cornering force, i.e. the lateral force F which is generated in the lateral direction Y of a tyre when a tiny slip angle ($\alpha$) is given in the running direction X of the tyre and the self-aligning torque SAT which revolves in the direction of the slip angle ($\alpha$) about the vertical axis Z that passes the centre of a tyre can be measured at a high precision.

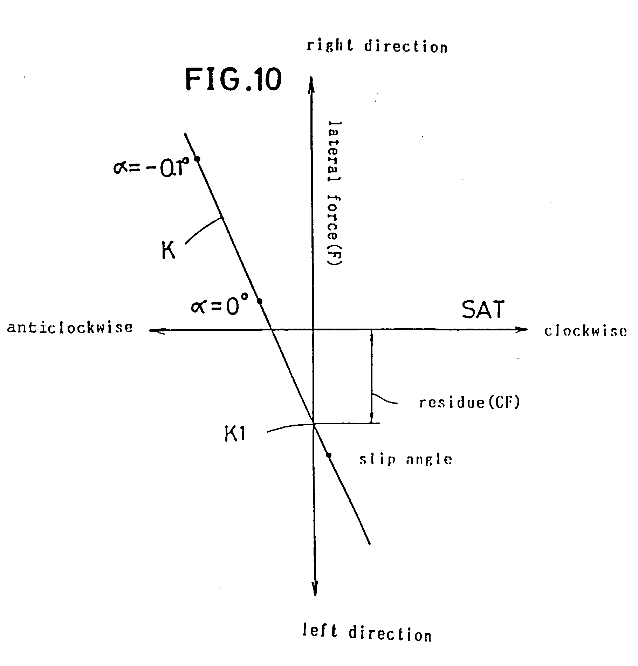

Such measurement results are shown by curve K in Fig.10, by plotting the self aligning torque SAT on the axis of abscissas and the lateral torque F on the axis of ordinates. In the curve K, the cases when the slip angle ($\alpha$) is 0 degrees, + 0.1 degrees or - 0.1 degrees are shown by dots.

From this relation of self-aligning torque SAT and lateral force F, the lateral force F at the crossing point K1 of the curve K and the axis of ordinates, that is, the lateral force F when the self-aligning torque SAT is not generated, can be derived and this is called the residue CF. It is the object of this invention to provide a tyre which prevents one sided drifting of the car, improves straight line performance and has good aesthetic appeal.

The inventors have found that the residue CF is the tyre characteristic which affects the one-side drifting of the car. In other words, a car drifts to one side when the residue CF is in the plus direction. i.e. the right direction. Thus, the one side drifting characteristics of a car can be evaluated by the direction and the size of the residue CF. In order to prevent the one side drifting of a car, it is required to reduce the residue CF.

The residue CF is generated from the expansion and contraction of the belt in the ground contact zone. A shearing strain in a surface is created in the cross ply belt of a radial tyre by the parallel movement of the cords due to expansion and contraction. Thus the tread rubber generates a steering torque by a shearing in the surface generated together with the strain of the belt ply in the outermost layer of the belt. It is considered that the lateral force F is created by this steering torque. Thus it was found that the residue CF is caused by the belt and depends on the cords quantity of the belt and the inclination of the belt cords.

The cord quantity is defined as N x S which is the product of the total sectional area of one belt cord S (mm$^2$) and the number of the belt cords N existing in 10cm in the right angled direction of the belt cords. The rigidity of the belt can be reduced by reducing the cord quantity N x S or by enlarging the inclination angle of the cords to the direction of the tyres equator. This reduces the hoop effect of the belt and the residue CF, thereby controlling the one side drifting of a car.

On the other hand, such a reduction of the rigidity of the belt can improve the ride comfort performance at the same time, which is a basic item required for a car.

Additional experiments were conducted for reduction of the residue CF in a tread having a relatively low belt rigidity. As a result, it was found that good results could be obtained by reducing the inclination of the lateral grooves crossing the circumferential grooves of the tread pattern, that is, positioning the lateral grooves closely in the direction of the tyres axis. However, such a tread pattern does not provide a sufficiently powerful image to customers, lacks aesthetic sense, and tends to decrease the marketability of the product.

In another approach it was found that by reducing the belt cord quantity and enlarging the inclination angle to the direction of the tyres equator, the hoop effect is reduced and the cornering force decreases especially upon turning, thus impeding the steering stability.

It is hence a primary object of the invention to provide a pneumatic radial tyre which prevents one side drifting of a car in driving, improves the straight forward driving performance and reduces the deterioration of steering stability.

In the aspect, as described above, by setting the inclination angle of the lateral grooves to the direction of tyres axis at a small angle, the residue CF can be reduced in a tyre. However, in order to increase the product appeal and the marketability of a tyre, a tread pattern must appeal to the aesthetic sense of customers. But, a pattern of lateral grooves extending in a direction of tyres axis is often seen to lack powerfulness. Therefore, in order to increase the powerfulness, the inclination should be larger, but on the

2

other hand, a larger inclination accompanies an increase of the residue CF. Therefore, it is required to meet these contradictory requirements.

According to the present invention a belted radial tyre comprises a pair of bead cores each disposed in each bead part, a carcass turned up around the bead cores, a steel belt disposed radially outside the carcass and inside a tread part, and at least two circumferential grooves in said tread part, wherein the tread part is provided with three circumferential lines of demarcation to define four equal-width axial sections, which are a pair of right and left axially inner sections one on each side of the tyre equator and a pair of right and left axially outer sections axially outward of the right and left inner sections, respectively, said tread part characterised in that at least either the paired inner sections or the paired outer sections are each provided with lateral V-shaped grooves pointing in the same circumferential direction, each said lateral V-shaped groove comprising an axially outer straight part and an axially inner straight part which are inclined at substantially the same angles but in opposite directions with respect to the axial direction so as to have a V-shaped configuration, the difference between the angles being not more than 5 degrees and said belt comprises two plies of parallel steel cords laid at not less than 21 degrees to the tyre equator, and each said ply has a cord quantity of less than 15, the cord quantity defined as the total of the cross sectional areas (mm$^2$) of the steel cords per 10cm ply width in a right angled direction to the steel cords.

Embodiments of the invention will be described in detail below, in conjunction with the attached drawings in which:-

Fig.1. is a sectional view showing an embodiment of the invention;

Fig.2. is a plan view showing the pattern for Fig 1;

Figs 3 to 6 are plan views showing other patterns;

Fig.7 is a sectional view of a belt ply;

Fig.8 is a sectional view showing an example of a belt cord;

Fig.9 is a perspective view explaining the residue CF;

Fig.10 is its diagram.

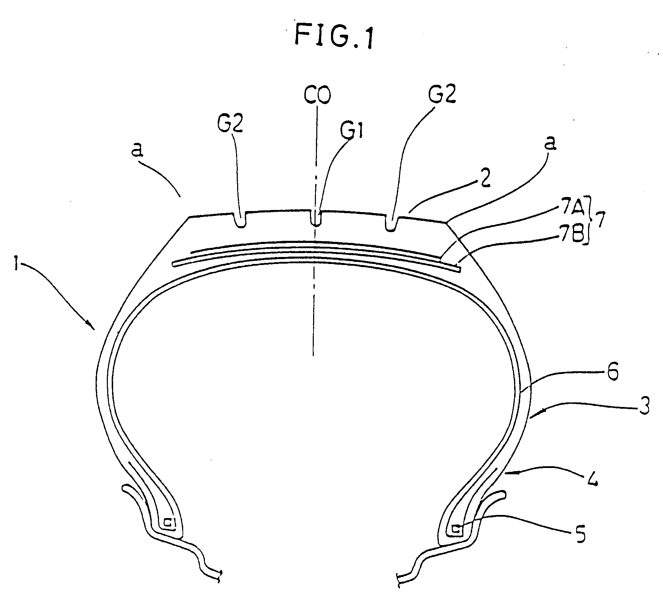

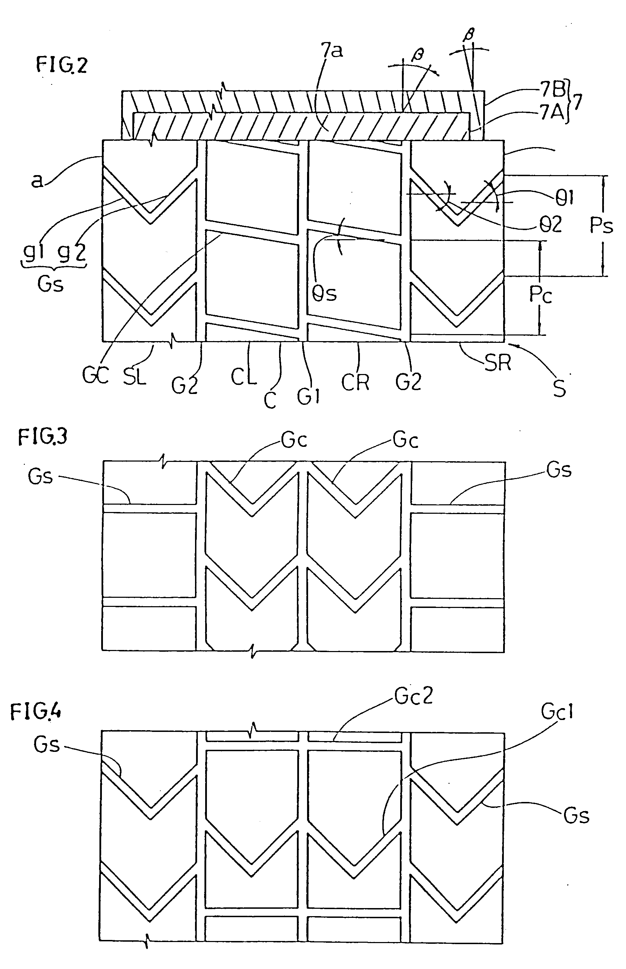

In Figs 1 and 2, a pneumatic radial tyre 1 of the first invention comprises a carcass 6 extending from a tread part 2 through a side-wall part 3 to a bead part 4 and wrapped around a bead core 5 in each bead a belt 7 is placed radially outside the carcass 6 and inside the tread part 2.

The belt 7 comprises belt plies 7A and 7B of two inside and outside layers whose cords are inclined in mutually reverse directions at an inclination angle $\beta$ of 21 degrees or more to the tyre equator CO. The outermost belt ply cords of the outside belt ply 7A in the embodiment are inclined in the right upper direction to the tyres equator CO as shown in Fig.2. For belt cords 7a, as shown for example in Fig.8, twisted steel filaments 7b in 2 + 7 x 0.22, 1 x 5 x 0.23 or 1 x 4 x 0.22 relationship may be used.

The cord quantity NS which is the product of the total sectional area S (mm$^2$) of one cord, that is, the sum of the sectional areas of the filaments 7b of the cord and the number of cords N in a distance $\ell$ of 10 cm in Fig.7 is 15.0 or less, thereby the rigidity of the belt 7 is reduced and the ride comfort performance is improved in the tyre.

In Fig. 2, the tread part 2 is sectioned in the direction of tyre axis into a left inside area CL and a right inside area CR at either side of the tyre equator CO, a left outside area SL and a right outside area SR which extend to the edges a of the tread part.

Outer lateral grooves Gs comprising an outer groove part g1 with an inclination angle ($\theta$1) of 45 degrees or less to the axial direction of the tyre and an inner groove part g2 inclined reversely to the outer groove part g1 at an angle ($\theta$2) and forming a V shape with the outer groove part g1 are constructed in the right and left outside areas. The difference of the inclinations ($\theta$1) and ($\theta$2) of the outer groove part g1 and the inner groove part g2, ($|\theta1-\theta2|$) is set at 5 degrees or less.

Thus, the outer lateral grooves Gs are substantially symmetrical in the direction of tyre axis, and the effect of the residue CF by the inclinations is reduced. This also improves the appearance of the tyre. In addition, in the right and left inside areas C, inner lateral grooves Gc are provided inclined in the right lower direction at an inclination angle ($\theta$c) of 5 degrees or less to the direction of the tyre axis.

If the inclination angle ($\theta$1,$\theta$2) of the outer lateral grooves Gs exceeds 45 degrees, pattern noise tends to be caused.

Circumferential grooves G1 and G2 are provided which extend continuously in the direction of the tyre equator CO separating the right and left inside area CL & CR and the middle position between the tyres equator CO and the edge of the tread part 2, sectioning the right and left inside areas CL,CR and the right and left outside area SL, SR. The circumferential grooves G (generally called the grooves G1, G2) may be linear grooves or zigzag grooves.

Circumferential pitches Ps and Pc are the distances between successive outer and inner grooves Gs and Gc in the direction of the tyres equator (CO) are both set at 40 mm or less, preferably 20 mm or less.

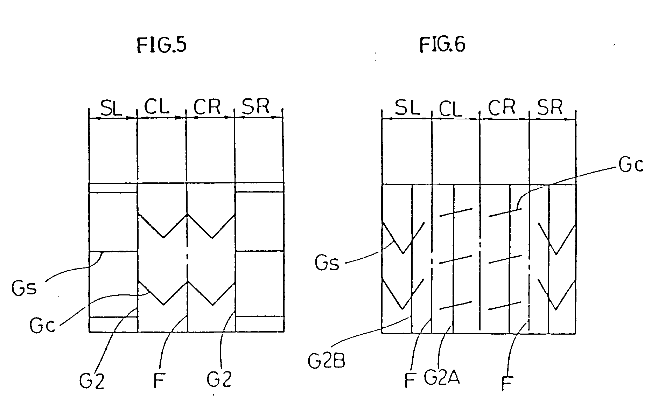

Fig.3 shows an embodiment where the inner circumferential groove GC in the inside area C is formed in a V shape.

Fig.4 shows an embodiment where the outer grooves Gs are formed in a V shape and a groove Gc2 extending in the direction of the tyre axis and V shaped grooves Gc1 are also formed in the inside areas CL, CR.

Thus shaped lateral grooves may be formed only in an inside area Gc or only in an outside area Gs or in both.

Thus Figs. 2 to 4 show embodiments where the main grooves G1 and G2 are placed in the parts that section the inside area C and the outside area S, while in the case where two main grooves G2 and G2 are employed, as shown in Fig.5 or in the case that four or more grooves G2A, and G2B are provided employed at regular intervals as shown in Fig.6, the inside area C and the outside area S are considered to be sectioned by a virtual line F on the rib. At least one end of the inner circumferential grooves Gc must open to the circumferential or main grooves G.

As a working example a prototype tyre having a size of 175/70R13 was produced and the ride comfort and the residue CF were measured. For the belt cords, steel cords of 1 x 4 x 0.22 were used. The belt was formed in two plies. The test was performed by mounting the tyre on a rim 5J x 13 setting the internal pressure at 2.0 kg/cm$^2$, the load at 300 kg and using a flat track tyre test machine supplied by MTS company, USA to measure the residue CF. The residue CF is shown by a residue CF index setting the index of the comparison example at 100 in Table 1 etc. The smaller the residue of Index is, the more preferable the result is. In regard to the ride comfort, by mounting the tyre on a 2,000 cc passenger car, a feel test was conducted by a driver, and an evaluation was made by setting the comparison examples at 100 points. Higher scores show better ride comfort.

In regard to the invention, a prototype of a tyre as shown in Table 1, Fig 2 & Fig 3 was produced. The results are also shown in Table 1.

4

EP 0 371 788 B1

Thus, the invention can improve the one-side drifting of a car without sacrificing steering stability.

Table 1

|  | Em. 1-1 | Em. 1-2 | Em. 1-3 | Em. 1 | Co. 1-1 | Co. 1-2 | Co. 1-3 | Co. 1-4 | Co. 1-5 | Co. 1-6 |
|---|---|---|---|---|---|---|---|---|---|---|
| Pattern | Fig.2 | Fig.2 | Fig.3 | Fig.3 | Fig.2 | Fig.2 | Fig.2 | Fig.2 | Fig.3 | Fig.3 |
| Belt cord M×S / Inclination angle | 12.2 / 21 | 12.2 / 25 | 14.5 / 21 | 14 / 25 | 15.4 / 21 | 15.4 / 18 | 20.5 / 21 | 20.5 / 18 | 12.2 / 21 | 14.5 / 21 |
| Lateral groove in V shape — Location | Outside area | Outside area | Inside area | Inside area | Outside area | Outside area | Outside area | Outside area | Inside area | Inside area |
| Inclination angle (θ1) | 35 | 35 | 35 | 35 | 30 | 30 | 20 | 20 | 30 | 20 |
| Inclination angle (θ2) | 35 | 40 | 35 | 40 | 40 | 40 | 40 | 40 | 40 | 40 |
| Inner lateral groove — Inclination angle (θc) | 2.5 | 2.5 | — | — | 2.5 | 2.5 | 2.5 | 2.5 | — | — |
| Inner lateral groove — Direction | Right lower | Right lower | — | — | Right lower | Right lower | Right lower | Right lower | — | — |
| Inner lateral groove — Circumferential pitch Pc (mm) | 18 | 18 | — | — | 18 | 18 | 18 | 18 | — | — |
| Outer lateral groove — Inclination angle (θs) | — | — | 0 | 0 | — | — | — | — | 10 | 10 |
| Outer lateral groove — Direction | — | — | Lateral | Lateral | — | — | — | — | Right upper | Right upper |
| Outer lateral groove — Circumferential pitch Ps (mm) | — | — | 18 | 15 | — | — | — | — | 18 | 18 |
| Riding comfort | 107 | 110 | 102 | 10 | 100 | 97 | 95 | 93 | 106 | 102 |
| Residue CF index | 80 | 35 | 90 | 50 | 100 | 130 | 110 | 140 | 100 | 120 |

Em. : Embodiment
Co. : Comparative example

## Claims

1. A belted radial tyre comprising a pair of bead cores (5) each disposed in each bead part (4), a carcass (6) turned up around the bead cores, a steel belt (7) disposed radially outside the carcass and inside a tread part (2), and at least two circumferential grooves in said tread part, wherein the tread part (2) is provided with three circumferential lines of demarcation to define four equal-width axial sections (SR,CR,CL,SL), which are a pair of right and left axially inner sections (CR,CL) one on each side of the tyre equator and a pair of right and left axially outer sections (SR,SL) axially outward of the right and left inner sections, respectively, said tread part characterised in that at least either the paired inner sections (CR and CL) or the paired outer sections (SR and SL) are each provided with lateral V-shaped

5

grooves (GC,GS) pointing in the same circumferential direction, each said lateral V-shaped groove comprising an axially outer straight part and an axially inner straight part which are inclined at substantially the same angles ($\theta1,\theta2$) but in opposite directions with respect to the axial direction so as to have a V-shaped configuration, the difference between the angles ($\theta1,\theta2$) being not more than 5 degrees and said belt comprises two plies (7A,7B) of parallel steel cords (7a) laid at not less than 21 degrees to the tyre equator, and each said ply has a cord quantity of less than 15, the cord quantity defined as the total of the cross sectional areas ($mm^2$) of the steel cords (7a) per 10cm ply width in a right angled direction to the steel cords.

2. A tyre according to claim 1 characterised in that said lateral V-shaped grooves are provided in only the two outer sections (SR and SL).

3. A tyre according to claim 1 characterised in that said lateral V-shaped grooves are provided in only the two inner sections (CR and CL).

4. A tyre according to claim 2 or 3 characterised in that the remaining inner or outer sections are provided with lateral straight grooves.

5. A tyre according to claim 1 characterised in that said lateral V-shaped grooves are provided in all the four inner and outer sections (CR,CL,SR,SL).

6. A tyre according to claim 5 characterised in that the two inner sections (CR,CL) are provided with lateral straight grooves.

7. A tyre according to any one of claims 1 to 6 characterised in that said at least two circumferential grooves are straight grooves which are located on said circumferential lines of demarcation and each said lateral V-shaped groove has at least one end connected to one circumferential groove.

8. A tyre according to any one of claims 1-6 characterised in that said at least two circumferential grooves are straight grooves which are not located on said circumferential lines of demarcation and each said lateral V-shaped grooved is crossed by one circumferential groove.

**Patentansprüche**

1. Ein mit einem Gürtel versehener Radialreifen mit einem Paar von Wulstkernen (5), die jeweils im jeweiligen Wulstteil (4) angeordnet sind, einer Karkasse (6), die um die Wulstkerne herum umgeschlagen ist, einem Stahlgürtel (7), der radial außerhalb der Karkasse und innerhalb eines Laufflächenteils (2) angeordnet ist, und wenigstens zwei Umfangsnuten in dem Laufflächenteil, worin der Laufflächenteil (2) mit drei Umfangsdemarkationslinien versehen ist, um vier gleich breite axiale Abschnitte (SR, CR, CL, SL) zu definieren, die jeweils ein Paar von rechten und linken axial inneren Abschnitten (CR, CL), einen auf jeder Seite des Reifenäquators, und ein Paar von rechten und linken axial äußeren Abschnitten (SR, SL) axial außerhalb der rechten und linken inneren Abschnitte darstellen, wobei der Laufflächenteil **dadurch gekennzeichnet** ist, daß wenigstens entweder die als Paar vorliegenden inneren Abschnitte (CR und CL) oder die als Paar vorliegenden äußeren Abschnitte (SR und SL) jeweils mit lateralen V-förmigen Nuten (GC, GS) versehen sind, die in die gleiche Umfangsrichtung zeigen, jede laterale V-förmige Nut einen axial äußeren geraden Teil und einen axial inneren geraden Teil umfaßt, die unter im wesentlichen den gleichen Winkeln ($\theta1$, $\theta2$), jedoch in entgegengesetzte Richtungen bezüglich der axialen Richtung geneigt sind, um eine V-förmige Konfiguration zu bilden, die Differenz zwischen den Winkeln ($\theta1$, $\theta2$) nicht mehr als 5 Grad beträgt und der Gürtel zwei Lagen (7A, 7B) paralleler Stahlkorde (7a) umfaßt, die unter nicht weniger als 21 Grad zum Reifenäquator gelegt sind, und jede Lage eine Kordquantität von weniger als 15 aufweist, wobei die Kordquantität als die Summe der Querschnittsflächen ($mm^2$) der Stahlkorde (7a) pro 10 cm Lagenbreite in einer rechtwinkligen Richtung zu den Stahlkorden definiert ist.

2. Ein Reifen nach Anspruch 1,
dadurch gekennzeichnet,
daß die lateralen V-förmigen Nuten in lediglich den zwei äußeren Abschnitten (SR und SL) vorgesehen sind.

3. Ein Reifen nach Anspruch 1,
dadurch gekennzeichnet,
daß die lateralen V-förmigen Nuten in lediglich den zwei inneren Abschnitten (CR und CL) vorgesehen sind.

4. Ein Reifen nach Anspruch 2 oder 3,
dadurch gekennzeichnet,
daß die verbleibenden inneren oder äußeren Abschnitte mit lateralen geraden Nuten versehen sind.

5. Ein Reifen nach Anspruch 1,
dadurch gekennzeichnet,
daß die lateralen V-förmigen Nuten in allen vier inneren und äußeren Abschnitten (CR, CL, SR, SL) vorgesehen sind.

6. Ein Reifen nach Anspruch 5,
dadurch gekennzeichnet,
daß die zwei inneren Abschnitte (CR, CL) mit lateralen geraden Nuten versehen sind.

7. Ein Reifen nach einem der Ansprüche 1 bis 6,
dadurch gekennzeichnet,
daß die wenigstens zwei Umfangsnuten gerade Nuten sind, die auf den Umfangsdemarkationslinien angeordnet sind, und wenigstens ein Ende jeder lateralen V-förmigen Nut mit einer Umfangsnut verbunden ist.

8. Ein Reifen nach einem der Ansprüche 1-6,
dadurch gekennzeichnet,
daß die wenigstens zwei Umfangsnuten gerade Nuten sind, die nicht auf den Umfangsdemarkationslinien angeordnet sind, und jede laterale V-förmige Nut von einer Umfangsnut gekreuzt wird.

**Revendications**

1. Pneumatique à carcasse radiale ayant une ceinture, comprenant deux tringles (5) disposées chacune dans une partie de talon (4), une carcasse (6) repliée autour des tringles, une ceinture (7) d'acier placée radialement à l'extérieur de la carcasse vers l'intérieur d'une partie (2) de bande de roulement, et au moins deux gorges circonférentielles disposées dans ladite partie de bande de roulement, la partie (2) de bande de roulement ayant trois lignes circonférentielles de démarcation destinées à délimiter quatre sections axiales de même largeur (SR, CR, CL, SL) qui forment une paire de sections axialement internes droite et gauche (CR, CL) de chaque côté de l'équateur du pneumatique et une paire de sections axialement externes droite et gauche (SR, SL) axialement à l'extérieur des sections internes droite et gauche respectivement, de la partie de la bande de roulement, caractérisé en ce que l'une au moins des sections internes appariées (CR et CL) ou des sections externes appariées (SR et SL) comportent chacune des gorges latérales en V (GC, GS) dirigées dans la même direction circonférentielle, chacune des gorges latérales en V comprenant une partie rectiligne axialement externe et une partie rectiligne axialement interne qui sont inclinées pratiquement des mêmes angles ($\theta1$, $\theta2$) mais en sens opposé par rapport à la direction axiale de manière qu'elles donnent une configuration en V, la différence entre les angles ($\theta1$, $\theta2$) ne dépassant pas 5° et la ceinture comprend deux nappes (7A, 7B) de câblés parallèles d'acier (7a) faisant un angle qui n'est pas inférieur à 21° par rapport à l'équateur du pneumatique, et chaque nappe a une quantité de câblés inférieure à 15, la quantité de câblés étant définie comme étant la somme totale des sections (en millimètres carrés) des câblés d'acier (7a) par fractions de 10 cm de largeur de nappe en direction perpendiculaire aux câblés d'acier.

2. Pneumatique selon la revendication 1, caractérisé en ce que les gorges latérales en V sont placées uniquement dans les deux sections externes (SR et SL).

3. Pneumatique selon la revendication 1, caractérisé en ce que les gorges latérales en V sont disposées seulement dans les deux sections internes (CR et CL).

4.  Pneumatique selon la revendication 2 ou 3, caractérisé en ce que les sections restantes internes ou externes ont des gorges latérales rectilignes.

5.  Pneumatique selon la revendication 1, caractérisé en ce que les gorges latérales en V sont disposées dans les quatre sections internes et externes (CR et CL, SR et SL).

6.  Pneumatique selon la revendication 5, caractérisé en ce que les deux sections internes (CR et CL) ont des gorges latérales rectilignes.

7.  Pneumatique selon l'une quelconque des revendications 1 à 6, caractérisé en ce que les deux gorges circonférentielles au moins sont des gorges latérales rectilignes qui sont placées sur les lignes circonférentielles de démarcation, et chaque gorge latérale en V a au moins une extrémité raccordée à une gorge circonférentielle.

8.  Pneumatique selon l'une quelconque des revendications 1 à 6, caractérisé en ce que les deux gorges circonférentielles au moins sont des gorges latérales rectilignes qui ne sont pas placées sur des lignes circonférentielles de démarcation, et chaque gorge latérale en V est recoupée par une gorge circonférentielle.

# FIG.1

EP 0 371 788 B1

FIG.2

FIG.3

FIG.4

## FIG.5

## FIG.6

# FIG.7

# FIG.8

# FIG.9

EP 0 371 788 B1

FIG.10